Europäisches Patentamt

European Patent Office

Office européen des brevets

Veröffentlichungsnummer: **0 536 501 A2**

# EUROPÄISCHE PATENTANMELDUNG

Anmeldenummer: **92113546.3**

Int. Cl.5: **F16C 13/00**

Anmeldetag: **08.08.92**

Priorität: **10.10.91 DE 4133562**

Veröffentlichungstag der Anmeldung:
**14.04.93 Patentblatt 93/15**

Benannte Vertragsstaaten:
**AT CH DE FR GB IT LI SE**

Anmelder: **J.M. Voith GmbH**
**Sankt Pöltener Strasse 43**

**W-7920 Heidenheim(DE)**

Erfinder: **Schiel, Christian**
**Albrecht Dürer-Strasse 90**
**W-7920 Heidenheim(DE)**

Vertreter: **Weitzel, Wolfgang, Dr.-Ing. et al**
**Friedenstrasse 10**
**W-7920 Heidenheim (DE)**

## Walze mit Biegungsausgleich.

Die Erfindung betrifft eine Walze mit Durchbiegungsausgleich mit einem diese durchsetzenden Längsträger (2, 32) und mindestens einem länglichen Anpreßschuh für den rotierbaren Walzenmantel (1, 31) der durch einen gegen den feststehenden Längsträger (2, 32) abgedichteten Kolben (4, 33) oder Kolbenteil aufweist, wobei der Schuh radial außen dem Innendurchmesser des Walzenmantels angepaßt ist, eine mittlere Druckkammer (Mittelkammer 12, 40) aufweist, die mit dem Druckraum (26, 45) des Kolbens (4, 33) strömungsmäßig verbunden ist, sowie mit Reihen von längs des Längsträgers angeordneten Hydrostatiktaschen (11, 36) beiderseits der Mittelkammer (12, 40), die über Drosselelemente (Kapillaren 21, 43) hydraulisches Druckmittel erhalten. Die Erfindung ist dadurch gekennzeichnet, daß die Druckmittelzufuhr zu den Hydrostatiktaschen unter Umgehung des Kolbendruckraumes (26, 45) bzw. der Mittelkammer (12, 40) erfolgt und eine Regeleinrichtung (81,; 86; 94, 98, 104, 82', 97) zur Steuerung der Kraft zwischen Längsträger (2, 32) und Walzenmantel (1, 31) durch Einstellung des Druckes in der Mittelkammer (12, 40) vorgesehen ist.

Fig.1

EP 0 536 501 A2

Die Erfindung bezieht sich auf die Ausgestaltung und Steuerung von Hydrostatikelementen in Preßwalzen, bei denen ein umlaufender Preßmantel an einem nicht umlaufenden Längsträger hydrostatisch gestützt wird.

Die hierzu verwendeten Hydrostatikkolben sind entweder rund oder länglich ausgebildet (betrachtet in radialer Draufsicht).

Die runden Kolben haben den Nachteil, daß sie bei sonst gleichen Randbedingungen (Stegbreite- und Spaltweite zwischen Schuh und Walzenmantel) einen größeren hydraulischen Umfang und damit sowohl mehr Druckmittelstrom als auch mehr Antriebsleistung benötigen (größere Stegflächen).

Aus diesem Grunde kommen für sparsame Betriebsweise nur längliche Hydraulikkolben in Betracht verbunden mit oder in Form von oder mit von ihnen getragenen z.B. 1, 2, 3 oder mehr Anpreßschuhen, verteilt über die Länge der Walze. Nach DE 25 02 161-A1 besteht ein solcher Anpreßschuh aus einem radial beweglichen Kolben, der über ein Kippgelenk mit einem Formstück verbunden ist, das dem Innenradius des Walzenmantels angepaßt ist und Hydrostatiktaschen enthält.

Eine breitere und längere Mitteltasche wird vom unter dem Kolben befindlichen Hydraulikraum aus über das Kippgelenk durchdringende Bohrungen mit Druckmittel versorgt. Die äußeren, über die Länge unterteilten Taschen erhalten von der Mitteltasche über Verbindungsbohrungen Öl zugeteilt, das über äußere Längsstege in den im wesentlichen drucklosen Innenraum der Walze abströmt.

Eine Walze dieser Bauart hat zwar den Vorteil, daß Sie bei gegebener Spaltweite und gegebenen Stegbreiten etwas weniger Verlustleistung hat, jedoch benötigt sie eine relativ große Spalthöhe, um bei größeren Stützkräften ein Anstreifen der inneren Längsstege am Walzenmantel infolge Durchbiegung des Formstücks um die Kippachse zu verhindern.

Der Druckmittelverbrauch steigt jedoch mit der dritten Potenz der Spaltweite, so daß z.B. bei 0,04 mm kleinster Spaltweite eine Spalterweiterung an den äußeren Längsstegen um 0,02 mm den Druckmittelstrom und damit die notwendige Pumpenleistung um den Faktor

$$\left(\frac{60}{40}\right)^3 = 3,375 \text{ erhöht.}$$

Ein weiterer Nachteil des Systems ist, daß die in die Hydrostatiktaschen geförderte Ölmenge proportional zur Linienkraft der Preßwalzen und umgekehrt proportional zur Ölviskosität ist.

Dies bedeutet, daß die Spaltweite zwischen den Stegen des Formstückes und dem Walzenmantel unabhängig von der Linienkraft etwa konstant bleibt und die für die Kühlung der Walze (Abfuhr der Reibungswärme bei der Rotation des Mantels über die Stege hinweg) wirksame Ölmenge bei niedriger Linienkraft sinkt und zu unerwünscht hohen Temperaturen führt, die ausgehend von der Reibung an den Stegen zu einem Temperaturgefälle nach innen und dadurch zu einer gleichsinnigen thermischen Verkrümmung des Formstückes führt, wie sie durch die Biegung infolge der Stützkraft am Kippgelenk gegeben ist. Es entsteht also nicht nur im Vollastbetrieb sondern auch im Teillastbetrieb mit niedriger Linienkraft eine Erweiterung der Spalte über den äußeren Stegen mit dem beschriebenen unerwünschten Effekt für die erforderliche Pumpenleistung.

Je kühler das Druckmittel zugeführt wird, desto stärker ist diese thermische Verkrümmung, weil die Innenseite des Formstückes stärker gekühlt wird und durch die bei geringerer Temperatur höhere Druckmittelviskosität weniger Druckmittel durch die Kapillaren hindurchtritt und somit für die Abfuhr der Reibungswärme, die im Spalt zwischen Formstück und Walzenmantel entsteht, weniger Druckmittel zur Verfügung steht.

Das Formstück wird also durch Zufuhr kühleren Öls aufgrund ungleicher Wärmedehnung noch krummer und könnte sogar im Extremfall mit den Innenstegen am Walzenmantel anstreifen, falls nicht durch Erhöung des Druckmittelstromes entgegengewirkt wird.

Es ist Aufgabe der Erfindung, solche negative Effekte zu verhindern und ein Anstreifen des Formstückes am Walzenmantel sowohl bei hohen, als auch bei niederen Druckkräften zu vermeiden; dieses auch bei Formstücken großer Breite (gemessen in Umfangsrichtung), bei denen die thermische Verkrümmung etwa mit dem Quadrat der Breite und die mechanische Verbiegung sogar mit der dritten Potenz der Breite ansteigt.

Es ist außerdem Aufgabe der Erfindung, die Druckmittelzufuhr und die Stützkrafteinstellung, präzise und ökonomisch, d.h. sparsam zu gestalten bzw. zu steuern.

Diese Aufgabe wird durch die kennzeichnenden Merkmale von Anspruch 1 gelöst.

Durch das erste Merkmal des Kennzeichens von Anspruch 1 wird sichergestellt, daß es im Teillastbetrieb mit geringer Linienkraft der Walze nicht zu einer erhöhten Erwärmung zwischen Walzenmantel und Formstück kommt und damit auch ein thermisches Verbiegen des Formstückes vermieden wird.

Durch das zweite Merkmal des Kennzeichens von Anspruch 1 wird eine präzise Druckregelung möglich, weil bei allen Linienkräften nur ein Teilstrom durch das Regelventil strömt. Dadurch wird der Druckverlust in der Regelleitung klein und die Druckregelung präzise, d.h. sie ist kaum abhängig von Mengen- und Viskositätsänderungen des Druckmittels.

Es ist nach einem weiteren Erfindungsgedanken vorgesehen, die hydraulisch wirksame Fläche des Formstückes (Mitte Außensteg bis Mitte Außensteg) oder Druckschuhs größer zu machen als die Kolbenfläche. Dadurch wird sichergestellt, daß der durchschnittliche Druck in den (seitlichen) Hydrostatiktaschen kleiner ist als in der Mittelkammer und die Regelung durch Einstellung des gewünschten Mittelkammerdruckes mittels Druckmittelzufuhr erfolgen kann. Damit gelangt auch das zur Druckregelung benötigte, das Druckregelventil passierende Druckmittel zusätzlich zu dem durch die Kapillaren geleiteten Druckmittel in die Dichtspalte am Formstück (oder Schuh) und hilft insbesondere die Erwärmung des Formstücks zu vermindern.

Allerdings ist auch eine Druckregelung durch Zufuhr des gesamten Druckmittels in die Hydrostatiktaschen einschließlich Mittelkammer und die gesteuerte Abfuhr einer Teilmenge aus der Mittelkammer über ein als Druckbegrenzer funktionierendes Regelventil möglich. Bei günstiger geometrischer Dimensionierung des Formstückes kann diese abgeführte Menge relativ klein gehalten werden. Die Größe der hydraulisch wirksamen Anpreßfläche zum Walzenmantel ist in diesem Fall in weiten Grenzen wählbar. Sie kann z.B. gleich groß, größer oder kleiner als die Kolbenfläche gemacht werden.

In Verbindung mit den Merkmalen von Anspruch 1 kann der Kolben des Anpreßschuhs auch durch Federn, die ihn z.B. auch entgegen der Schwerkraft gegen den laufenden Walzenmantel drücken, ausgestattet werden, ohne die Gefahr, daß er am Mantel anstreift, solange die Drucköolzufuhr in Betrieb ist.

Zum Anlegen des Schuhs (Formstücks) an den Walzenmantel kann die in Anspruch 5 genannte Methode dienen. Ein Anlegen des Formstückes an den Walzenmantel wird dabei dadurch erreicht, daß die mit dem Druckregelventil in Verbindung stehende Teilfläche des Kolbens mit einem Druck beaufschlagt wird, der ausreichend hoch ist, um das Eigengewicht des Anpreßschuhs und Reibungskräfte der Kolbendichtung zu überwinden.

Dabei sind Druckmitteldurchfluß und Drosselquerschnitte zwischen dieser Teilfläche und der Restfläche so zu begrenzen, daß bei einem bestimmten, am Regelventil eingestellten Minimaldruck die gewünschte Anpreßkraft auf den Kolben entsteht.

Weil sich Längsträger und Kolben relativ zueinander bewegen, ist eine anpaßbare Leitungsverbindung für das Druckmittel zu den Kapillaren erforderlich. Anstelle eines Schlauches, der viel Platz beansprucht (Schwächung der Längsträger), ist es vorteilhaft, zwischen zwei ungefähr fluchtende Radialbohrungen in Längsträger und Kolben, Verbindungshülsen in engen Grenzen mit eine kugelige Einstellbarkrei erlaubenden Dichtungen an beiden Enden vorzusehen, durch die das Druckmittel zu den Hydrauliktaschen gefördert wird. Die axiale Beweglichkeit dieser Stutzen in den beiden Bohrungen ist so bemessen, daß einerseits die volle Hubhöhe, die zwischen Längsträger und Schuh möglich ist, ausgeglichen werden kann und andererseits bei Maximalhub ein Herausrutschen der Dichtringe aus den Bohrungen nicht erfolgen kann. Bevorzugt werden diese beweglichen Stutzen an einem oder an beiden Enden des Kolbens, wenn nur ein Kolben über die Breite vorhanden ist, positioniert, weil dort die Durchbiegung des Längsträgers am geringsten und folglich der notwendige Hub am kleinsten ist.

Es ist besonders vorteilhaft, die Aufteilung der beiden Druckräume in der Weise vorzunehmen, daß ein Druckraum in "Rahmenform" am Umfang des Kolbens, der mit der Mittelkammer verbunden ist, und ein zweiter Druckraum vorgesehen ist, der den Mittelteil des Kolbens beaufschlagt. Auf diese Weise kann der mittlere Druckraum zusammenhängend, genügend groß und einfach abdichtbar gestaltet werden.

Dabei ergibt sich eine einfache "Drossel"-Dichtung durch Ausbildung des Kolbens mit einem Querschnitt in Furm eines U, das mit den Schenkeln in zwei Nuten des Längsträgers hineinragt.

Die Abdichtung zwischen Kolben und Längsträger erfolgt außen an den Schenkeln des U, die Drosselspalte befinden sich innen an den Schenkeln. Bei steigenden Linienkräften ergibt sich infolge der Durchbiegung des Längsträgers eine so große Verschiebung zwischen dieser und dem Walzenmantel, gegen den das Formstück anliegt, daß die Drosselspalte sich in Richtung zu kleineren Drosselwiderständen verändern und schließlich durch größere Öffnungen zwischen den beiden Druckräumen abgelöst werden (z.B. in Walzenmitte bzw. stärker zur Walzenmitte hin). Dies hat keine Konsequenzen für die Regelgenauigkeit der Walze, weil diese Änderung des Drosselwiderstandes zumindest bei kleinen Linienkräften annähernd linear erfolgt und in der Steigung der linearen Regelfunktion zwischen äußeren Kräften und Walzeninnendruck berücksichtigt werden kann in Form einer Korrektur der Steigung dieser Regelgeraden.

Um den mittleren Kolbendruckraum auch genügend an den Kolbenenden (Stirnseiten) zu gewährleisten, ist weiter vorgesehen, zwei stirnseitige Dichtschieber in der Nähe der beiden Enden des Kolbens in Quernuten im Längsträger anzubringen, die in den Zwischenraum zwischen den Schenkeln des U-förmigen Kolbens passen und durch Federn an den Kolben angedrückt werden.

Es bestehen dann Verbindungskanäle zwischen den äußeren Kolbendruckräumen und der Mittelkammer vorzugsweise stirnseitig außerhalb dieser Dichtschieber an den Enden des Kolbens.

Ein weiterer Erfindungsgedanke sieht schließlich ein Druckregelventil vor, das bei Steuerung auf Druck Null ein Öffnen sowohl der Druckmittelzufuhr der Leitungen zur Mittelkammer als auch der Leitungen zu den Hydrostatiktaschen zum Tankrücklauf hin bewirkt, damit beim Entlasten ein schneller Druckabbau erfolgen kann.

Dasselbe Ventil kann dabei eine erste Steuerkante zur Druckregelung im Normalbetrieb und eine zweite Steuerkante zur Druckentlastung bei Linienkraft "Null" besitzen.

Beide Steuerkanten können dabei auf einem axial beweglichen Steuerschieber angeordnet sein, der durch Federkraft in Richtung "entlasten" und durch einen fluidischen Kraftgeber mit einem z.B. durch eine pneumatisch beaufschlagte Rollmembran und ein Druckstück veränderlich abgegrenzten Druckraum in Richtung "belasten" bewegt wird.

Die Erfindung wird nun anhand der in den Figuren der Zeichnung erläutert; dabei stellt im einzelnen

    Figur 1     einen Teilquerschnitt durch eine Walze mit kippbar auf einem Kolben gelagerten Formstück,

    Figur 2     eine Ansicht in Pfeilrichtung P (Fig. 1) des Formstückes,

    Figur 3     einen Teilquerschnitt einer Variante der Walze, bei der Kolben und Formstück eine Einheit bilden,

    Figur 4     einen Längsschnitt gemäß Schnittlinie IV-IV der Fig. 3,

    Figur 5     ein Prinzipbild der Druckmittelführung durch die Walze und

    Figur 6     ein Regelventil im Querschnitt

dar.

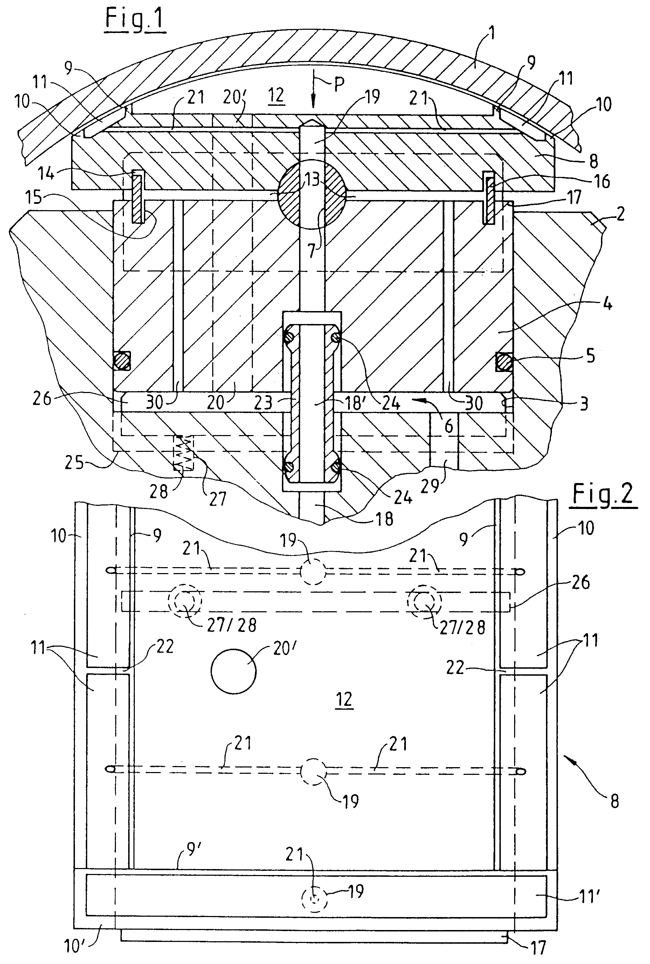

In Fig. 1 befindet sich in einem drehbar gelagerten Walzenmantel 1 ein stationärer Längsträger (Joch) 2 und in diesem eingebettet ein radial bewegbarer Kolben 4, der mit Dichtungen 5 an den Wänden 3 des Joches abgedichtet ist. Kolbendruckraum 6 ist mit Druckmittel beaufschlagbar, das durch die Leitung 29 herangeführt wird.

Auf einem am Kolben 4 befestigten, ein Durchgangsloch 69 aufweisenden Gelenkbolzen 7 ist ein Formstück 8 kippbar gelagert. Das Formstück ist radial außen dem Innendurchmesser des Mantels angepaßt. Das Formstück besitzt außerdem einen im wesentlichen über seine ganze Länge sich erstreckenden mittleren Druckraum 12 und mehrere über seine Länge verteilte, voneinander durch Querstege 22 getrennte Drucktaschen 11, die nach außen durch Stege 10 und nach innen zur Mittelkammer 12 hin durch Stege 9 begrenzt sind. Der Zwischenraum 13 zwischen Kolben 4 und Formstück 8 ist über Bohrungen 30 mit dem Druckraum 6 verbunden. Der Druckraum 13 ist nach außen durch Leisten 16 abgedichtet, die in Nuten 14 und 15 beweglich sind. Die stirnseitige Abdichtung von Raum 13 erfolgt durch Enddichtungen 17. Druckmittel wird direkt von einer volumetrischen Pumpe durch Leitungen 18, 18' und 19 sowie Kapillaren 21 den Taschen 11 zugeführt. Die Verbindung von Leitung 18 zu Leitung 19 erfolgt durch eine verschiebbare und leicht winklig einstellbare Zwischenhülse 23 mit Dichtringen 24. In jeweils einer Quernute 25 im Joch 2 ist ein Dichtschieber 26 geführt.

In Fig. 2 sieht man in der Draufsicht P (Fig. 1) das eine Ende des Formstückes 8. Die Mittelkammer 12 wird über Leitung 20 und 20' vom Kolbendruckraum 6 her mit Druckmittel versorgt. Eine stirnseitige Hydrostatiktasche 11' wird durch Stege 10' und 9' begrenzt. Die Druckmittelzufuhr erfolgt über die Bohrungen 19 und Kapillaren 21, 21' bzw. 21'' in die Taschen 11 bzw. 11'.

Ebenfalls erkennbar sind eine der stirnseitigen Enddichtungen 17 sowie einer der Dichtschieber 26, die durch Federn 28 an die Unterseite des Kolbens 4 angepreßt werden, die in im Träger 2 vorgesehene Sacklöcher 27 angebracht sind.

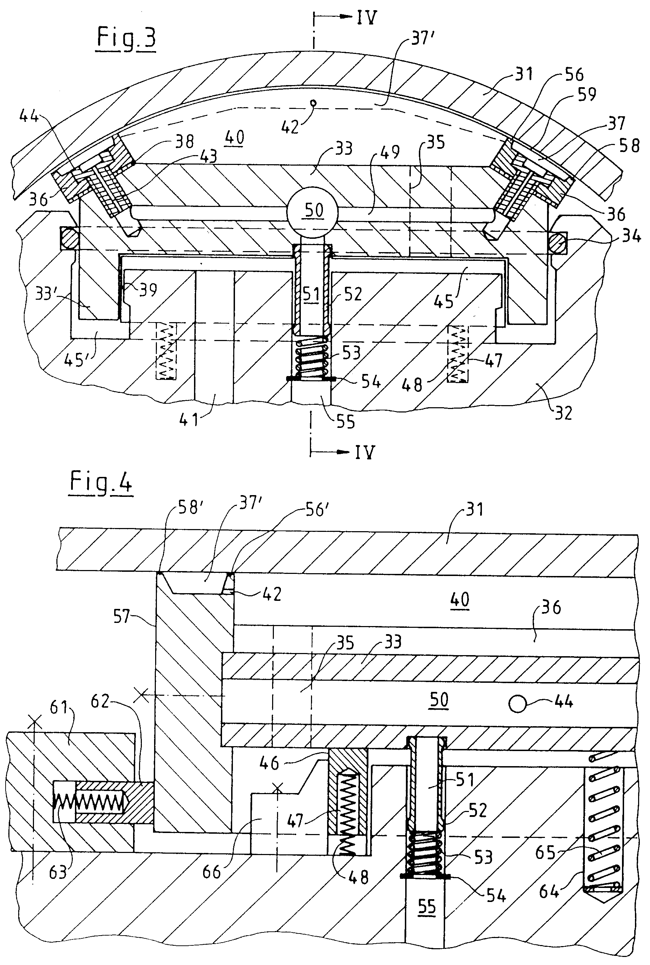

In Fig. 3 sind mit 31 ein rotierbarer Walzenmantel, 32 ein feststehender, im Inneren und längs dieses Mantels sich erstreckender Längsträger und mit 33 ein im Längsträger 32 radial bewegbarer und kippbarer Kolben bezeichnet. Ein Druckraum 45 ist durch Dichtungen 34 nach außen abgedichtet. Auf den Kolben 33 sind Dichtleisten 36 mit Schrauben 44 aufgeschraubt. In die Dichtleisten 36 sind mehrere über die Länge verteilte Hydrostatiktaschen 37 eingearbeitet, die von Stegen 56 und 58 begrenzt sind. Zwischen den Dichtleisten 36 und dem Kolben 33 sind Wärme-Isolierplatten 38, die auch zur Dichtung dienen können, angeordnet. Zwischen den Dichtleisten 36 befindet sich ein Druckraum 40, der über Bohrungen 35 mit dem Druckraum 45' (Fig. 4) verbunden ist. Dieser wird über Leitung 41 mit Druckmittel gespeist. Drosselspalte 39 im Druckraum 45 sorgen für eine anfänglich hohe Druckdifferenz zum Druckraum 45', die beim Anfahren zum Anheben des Kolbens 33 entgegen der Schwerkraft führt, sobald Druckmittel in ausreichender Menge durch Kanal 41 zugeführt wird. Die Schrauben 44 besitzen axiale Kapillarbohrungen 43. Die Einspeisung des Druckmittels in die Hydrostatiktaschen 37 erfolgt durch die Leitung 55 und ein bewegliches Zwischenstück 52 mit Bohrung 51 in den axialen Verteilerkanal 50 des Kolbens 33 mit Zweigbohrungen 49. Das Zwischenstück 52 wird durch eine Feder 53 gegen den Kolben 33 gedrückt. Die Feder 53 stützt sich im Joch 32 auf einem Federring 54 ab.

In Fig. 4 erkennt man des weiteren eine Enddichtleiste 57, die am Kolben 33 befestigt, z.B. festgeschraubt ist. In dieser Endleiste befindet sich eine Tasche 37', die über eine Kapillarbohrung 42 mit Druckmittel versorgt wird. Eine Stirndichtleiste 62 ist in einem auf den Längsträger 32 fest aufgesetzten, z.B. aufgeschraubten Dichtleistenhalter 61 axial beweglich gelagert und wird von Federn 63 gegen die Enddichtleiste 57 gedrückt. Ein Dichtschieber 46 ist radial beweglich in einer Nut geführt, die einerseits durch das Längsträger 33 und andererseits durch den mit diesem fest verbundenen, z.B. verschraubten Block 66 gebildet wird. Eine in einer Bohrung 47 des Dichtschiebers 46 vorgesehene Feder 48 drückt den Dichtschieber 46 gegen den Kolben 33. In weiteren, im Längsträger 32 vorgesehenen Bohrungen 64 können bei Bedarf Feder 65 gelagert sein, die den Kolben 33 gegen den Mantel 31 drücken. Wenn diese Federn 65 genügend kräftig ausgeführt werden, kann zum Anlegen der Dichtleisten 36 an den Walzenmantel 33 auf den Drosselspalt 39 verzichtet werden, d.h. der Spalt 39 kann weit gemacht werden, Dichtschieber 46 können entfallen und man hat nur einen einzigen Druckraum 45.

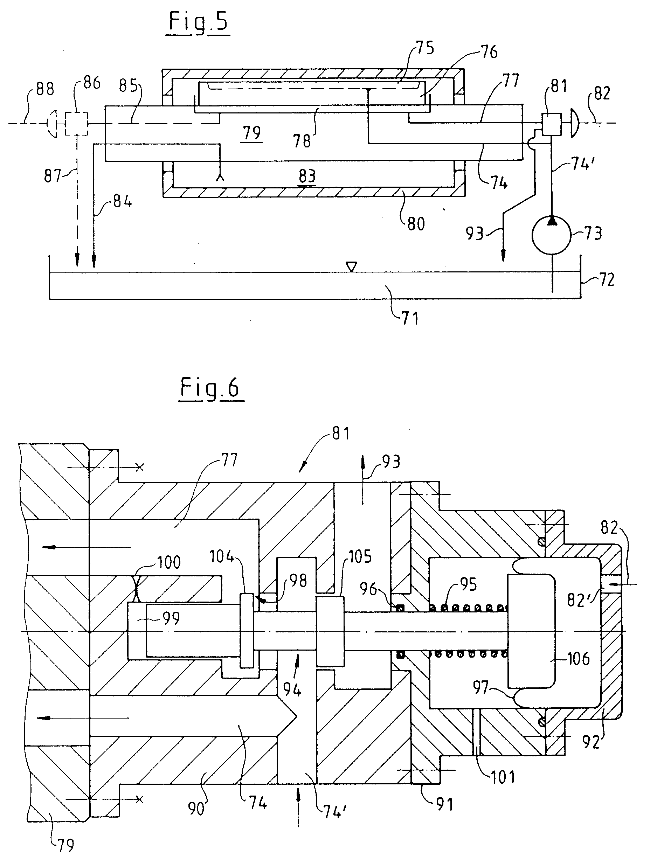

In Figur 5 wird in schematisch vereinfachter Weise der Weg des Druckmittels von der Druckmittelquelle zu den Drucktaschen bzw. der Mittelkammer und den Kolbendruckraum erläutert. Der Weg des Druckmittels zu den Hydrostatiktaschen 75 bzw. 11 und 37 nach Fig. 1 bzw. Fig. 3 erfolgt direkt über die Leitung 74, die sich auch in Fig. 6 wiederfindet. Dabei wird das Druckmittel (Fluidum) 71 aus dem Tank 72 von der Pumpe 73 zu Leitung 74' hineingefördert (siehe auch Fig. 6). Der andere Teilstrom des Druckmittels gelangt über das Regelventil 81 (siehe auch Fig. 6) zu dem Kolbendruckraum 6 in Fig. 1 bzw. 45 in Fig. 3 über Leitung 77 und dann 29 (in Fig. 1) bzw. 41 und 35 (in Fig. 3 und 4) sowie in die Mittelkammer schließlich über Leitung 20 und 20' (in Fig. 1) und Leitung 35 (in Fig. 3 und 4). Die Einstellung des Druckes erfolgt am Regelventil 81 über die Steuerleitung 82. Eine Leckölleitung bzw. Entlastungsleitung 93 führt vom Ventil 81 zurück zum Tank 72. Das aus den Hydrostatiktaschen 75 (bzw. 11 in Fig. 1 und 37 in Fig. 3) in den Innenraum 83 der Walze 80 bzw. 1 übertretende Druckmittel strömt durch Leitung 84 zurück zum Tank 72.

Als Alternative zum Regelventil 81 und Steuerleitung 82 sowie Leitung 77 kann die Druckregelung auch dadurch erfolgen, daß Druckmittel aus dem Kolbendruckraum 78 über Ablaufleitung 85 zu einem Druckbegrenzungsventil 86 und durch dieses Druckbegrenzungsventil hindurch über Leitung 87 zurück in den Tank 72 geleitet wird. Über Steuerleitung 88 wird der gewünschte Druck im Druckraum 78 eingestellt. Das Druckbegrenzungsventil 88 öffnet, sobald der Druck im Druckraum 78 den eingestellten Sollwert übersteigt und schließt, sobald der Druck unter den Sollwert fällt. Die Steuerleitungen erhalten einen Steuerdruck abhängig vom gewünschten Druck des Kolbendruckraums.

Es ist üblich und sinnvoll, daß die (hydraulische) Druckfläche der Mittelkammer 12, 40 kleiner als die (hydraulische) Druckfläche des Kolbens 4, 33 ist.

Natürlich ist auch der Zwischenraum 13 zwischen Kolben 4 und Formstück 8 hinsichtlich seiner hydraulisch wirksamen Druckfläche kleiner als die Kolbendruckfläche.

In Fig. 6 erkennt man ein Ventilgehäuse 90 mit dem Regelkolben 94 und den Längsträger 79 (2 in Fig. 1, 32 in Fig. 3) mit den beiden Druckmittelleitungen 74 und 77, die sich in das Ventilgehäuse 90 hinein fortsetzen. Die von der Pumpe 73 kommende Leitung wird unten am Kanal 74' angeschlossen. Durch den Regelspalt 98 strömt so viel Druckmittel zur Leitung 77 über, wie zur Aufrechterhaltung des gewählten Druckes dann nötig ist. Der Steuerschieber 94 ist dabei einerseits im Ventilgehäuse 90 und andererseits im Gehäuseoberteil 91 verschiebbar geführt. Ein Gehäuseteil 91 ist durch eine Kappe 92 verschlossen, die einen Anschluß 82 für Steuerluft besitzt. Eine Leckölleitung 93 führt zurück zum Tank. Der Steuerschieber 44 wird durch eine Feder 95 nach rechts gedrückt (Druckverringerung) und durch eine an einem Druckstück 106 des Steuerschiebers 94 anliegende Rollmembrane 97 nach links (Druckerhöhung), sobald an der Öffnung 82' Druck (hydraulisch oder pneumatisch) angelegt wird. In der linken Extremstellung des Steuerschiebers ist der Regelspalt 98 voll offen.

Wenn sich der Steuerschieber 94 aus der Endstellung "entlastet" in Richtung "belasten" bewegt, verschließt er nacheinander zunächst einmal mit einem ersten Steuerbund 105 einen Ventilquerschnitt zwischen Druckölzufuhrleitung 74', an den auch die Kapillaren 21 bzw. 43 direkt angeschlossen sind, und einen drucklosen Auslaß 93 und dann anschließend mit einem zweiten Steuerbund 104 die Ventilöffnung, die Zufuhrleitung 74'' und Kolbendruckkammer 12 bzw. 40 verbindet.

Erst wenn der Steuerschieber mit dem zweiten Steuerbund 104 durch diese zweite Ventilöffnung hindurchgefahren ist, wird auf der Rückseite dieses Steuerbundes die den Kolbendruck regelnde Steuerkante aktiv.

Wenn dieser Ventilquerschnitt zu stark gedrosselt ist, sinkt der Anpreßdruck des Formstückes ab, und der fluidische Steuerdruck sorgt wieder für ein stärkeres Öffnen des Ventilquerschnitts.

Das Absinken des Anpreßdruckes bei geschlossener Ventilöffnung, d.h. unterbundener Strömung zur Mittelkammer, ist zwangsläufig, wenn die wirksame Fläche des Kolbens kleiner ist als die der Taschen einschließlich Mittelkammer. Aus diesem Grunde muß dann der Mittelkammerdruck immer größer sein als jener in den Hydrostatiktaschen, und es entsteht eine Druckmittelströmung aus der Mittelkammer in die Hydrostatiktaschen.

Bei Abfall des Druckes in der Steuerleitung 82 bewegt sich der Steuerschieber nach rechts und stellt nacheinander eine Verbindung zwischen Leitungen 74 bzw. 74' und 93 und in seiner rechten Extremstellung auch zwischen Leitungen 74 und 77 und somit auch zwischen Leitung 77 und 93 her. Außerdem ist am linken Ende des Steuerschiebers 94 eine Dämpfungskammer 99 vorhanden mit einer Drossel 100 zur Leitung 77 hin. Ein Dichtring 96 kann eingesetzt werden, um ein Austreten von Öl in das Gehäuse 91 zu verhidern. Eine Druckausgleichsbohrung 101 verbindet den Innenraum vom Gehäuse 91 mit der Atmosphäre. Diese Bohrung 101 kann auch wahlweise in die Tankleitung 93 geführt werden. Die Rollmembrane 97 ist zwischen Gehäuseoberteil 91 und Deckel 92 geklemmt und ihr Rand dient dort als Dichtung.

**Patentansprüche**

1. Walze mit Durchbiegungsausgleich mit einem diese durchsetzenden Längsträger (2, 32) und mindestens einem länglichen, sich längs der Längsachse des Längsträgers (2, 32) erstreckenden Anpreßschuh für den rotierbaren Walzenmantel (1, 31), der einen gegen den feststehenden Längsträger (2, 32) abgedichteten und sich längs der Längsachse des Längsträgers (2, 32) erstreckenden, länglichen Kolben (4, 33) oder Kolbenteil aufweist, wobei der Schuh radial außen dem Innendurchmesser des Walzenmantels angepaßt ist und eine mittlere Druckkammer (Mittelkammer 12, 40) aufweist, die mit dem Druckraum (6, 45) des Kolbens (4, 33) strömungsmäßig verbunden ist, sowie mit Reihen von längs des Längsträgers angeordneten Hydrostatiktaschen (11, 36) beiderseits der Mittelkammer (12, 40) ausgebildet ist, die über Drosselelemente (Kapillaren 21, 43) hydraulisches Druckmittel erhalten, dadurch gekennzeichnet, daß die Druckmittelzufuhr zu den Hydrostatiktaschen unter Umgehung des Kolbendruckraumes (6, 45, 72) bzw. der Mittelkammer (12, 40) von einer Druckquelle ungeregelt erfolgt und eine Regeleinrichtung (81,; 86; 94, 98, 104, 82', 97) zur Steuerung der Kraft zwischen Längsträger (2, 32) und Walzenmantel (1, 31) durch Einstellung des Druckes in der Mittelkammer (12, 40) vorgesehen ist.

2. Walze nach Anspruch 1, dadurch gekennzeichnet, daß ein mit dem Kolben (4, 33) über ein Kippgelenk (7) verbundenes, die Mittelkammer (12, 40) sowie die Hydrostatiktaschen (11, 36) aufweisendes Formstück (8, 36) vorgesehen ist, zu dessen dem Kolben (4, 33) zugewandter Fläche mindestens eine von dem Druckraum (26, 45) desselben ausgehende Leitung (30) geführt ist.

3. Walze nach Anspruch 1 oder 2, dadurch gekennzeichnet, daß die hydraulisch wirksame Anpreßfläche des Schuhes (8; 33, 36) gegenüber dem Walzenmantel (1, 31) größer ist als die wirksame hydraulische Druckfläche des Kolbens (4, 33) und daß die Regelung der Anpreßkraft des Schuhes (8; 33, 36) durch variable Druckmittelzugabe zur Mittelkammer (12, 40) erfolgt.

4. Walze nach Anspruch 3, dadurch gekennzeichnet, daß die Regelung des Druckmittels durch ein Druckregelventil (81) ohne Umkehr der Durchflußrichtung desselben erfolgt.

5. Walze nach einem der Ansprüche 1 bis 3, dadurch gekennzeichnet, daß die Regelung der Anpreßkraft des Schuhs mittels einem die Abströmung von Druckmittel aus der Mittelkammer (12, 40) bzw. dem Kolbendruckraum (6, 45) steuerndes Druckbegrenzungsventil (81) erfolgt.

6. Walze nach einem der Ansprüche 1 bis 5, gekennzeichnet durch Federn (65) zur Anpressung des aus Kolben (33) und mit ihm fest verbundenen Formstücken (36) gebildeten Schuhes gegen den Walzenmantel (36).

7. Walze nach einem der Ansprüche 1 bis 6, gekennzeichnet durch mindestens eine relativ zum Kolben (4, 33) axial und radial zumindest ein wenig bewegliche, einen zentralen Kanal (18', 51) aufweisende Verbindungshülse (23, 52), die zwecks Druckmittelzufuhr zu den den Hydrostatiktaschen (11, 37) vorgeschalteten Drosseln (Kapillaren 21, 43) zwischen dem Längsträger (2, 32) und dem Kolben (4, 33) angeordnet ist.

8. Walze nach einem der Ansprüche 1 bis 5, dadurch gekennzeichnet, daß die (hydraulische) Druckfläche der Mittelkammer (12, 40) kleiner als die (hydraulische) Druckfläche des Kolbens (4, 33) ist.

9. Walze nach einem der Ansprüche 1 bis 8, dadurch gekennzeichnet, daß der Kolbendruckraum in zwei Teilräume (45, 45') getrennt ist, die über Drosselstellen (39) miteinander verbunden sind, wobei der mittlere Teilraum (45) mit der Mittelkammer (40) und mit dem Druckregelventil (81) verbunden ist.

10. Walze nach Anspruch 9, dadurch gekennzeichnet, daß der mit der Mittelkammer (40) verbundene Teilraum (45) ein äußerer, rahmenförmig ausgebilderter Druckraum des Kolbens (33) ist, wobei der Kolben (33) schalenförmig mit Randstegen (33') ausgebildet ist, deren Querflächen den rahmenförmigen Druckraum bilden, und daß der mit der vom Druckregelventil (81) kommenden Druckmittelzuleitung (41, 77) verbundene Druckraum (45') am inneren Teil des Kolbens (33) angeordnet ist.

11. Walze nach einem der Ansprüche 1 bis 10, dadurch gekennzeichnet, daß die Druckmittelzufuhr zur Mittelkammer (12, 40) über ein Regelventil (81; 94, 98, 104, 82, 97) über eine erste Ventilöffnung (98) und Steuerbund (104) erfolgt und daß bei vollständiger Innenkraftentlastung eine zweite Ventilöffnung mit Steuerbund (105) aktiviert wird, die die zu der Mitteltasche (12, 40) führende Druckmittelleitung (77) bzw. die Druckmittelzufuhrleitung (74') mit einer drucklosen Ablaufleitung (93) verbindet.

12. Walze nach Anspruch 11, dadurch gekennzeichnet, daß die Steuerbunde an einem einzigen Steuerschieber (94) vorgesehen sind, der durch eine Feder (95) in Richtung "Entlasten" und einen fluidischen Kraftgeber (97, 106) in Richtung "Belasten" bewegt wird.

13. Walze nach Anspruch 12, dadurch gekennzeichnet, daß der fluidische Kraftgeber aus einer einen Druckraum begrenzenden, rotationssymmetrisch ausgebildeten Rollmembran (97) und einem stirnseitigen Druckstück (106) des Steuerschiebers (94) besteht, an den sich die Räumerbahn ihrem mittleren Bereich anlegt, wobei an den Druckraum eine Druckleitung (82) angeschlossen ist.

Fig.1

Fig.2

Fig.3

Fig.4

Fig.5

Fig.6